# EUROPEAN PATENT SPECIFICATION

(11) **EP 3 865 764 B1**
(45) Date of publication and mention of the grant of the patent: **03.09.2025**
(21) Application number: 21165743.2
(22) Date of filing: 30.07.2018
(51) Int. Cl.: F21S 9/02, F21V 8/00, F21V 15/00, F21V 3/06, F21V 31/00, F21W 111/00, F21Y 105/10, F21Y 115/10, F21Y 113/10

(54) **LUMINAIRE**
LEUCHTE
LUMINAIRE

(43) Date of publication of application: 18.08.2021
(62) Divisional of application: 18186334.1
(73) Proprietor: Thorn Lighting Ltd., London W1U 7EU (GB)
(72) Inventor: ROUND, David, Bishop Middleham DL 17 9AF (GB); HODGSON, Robert, Spennymoor DL 16 6SG (GB); KEANE, Raymond, Spennymoor DL 16 7TU (GB); BOWNESS, Anton, Shiremoor Newcastle Upon Tyne (GB)
(74) Representative: Kiwit, Benedikt

(56) References cited:
- CN-U- 203 309 793
- JP-U- S6 033 706
- KR-A- 20090 017 152
- US-A1- 2003 179 565
- US-A1- 2004 156 192
- US-A1- 2016 230 973

## Description

### 1. Field of the invention

The present invention relates to a luminaire, in particular to an emergency luminaire, with an indicator light source.

### 2. Technical background

In the prior art, luminaires with an indicator light source are well known. Such luminaires may be used for indicating the status of internal components of the luminaire, e.g. the charging level of a battery for an emergency operation mode of the luminaire. The indicator light source may be positioned outside of the luminaire. However, in case of water resistant luminaires or just to protect the indicator light source, said indicator light source may also be placed inside of the housing or luminaire. In order to provide good visibility of the light emitted of the indicator light source, the indicator should best be placed in close proximity to a luminaire cover, through which the luminaire emits light.

Indicating by means of the indicator light source should always be ensured, in particular when the luminaire is damaged or not functioning anymore. Therefore, environmental influences on the luminaire, e.g. external impacts or impact forces, should not affect the indicator light source and other internal components of the luminaire. However, since in the prior art the indicator light source is provided usually behind the luminaire cover and in close proximity of the luminaire cover, in particular impact forces on the luminaire cover may be transferred to the indicator light source or the other internal components of the luminaire and thus might damage these components. In the prior art, it is thus difficult to achieve high impact rated (IK) luminaires, since damage of the indicator light source is a failure of the IK rating. The IK rating quantifies the ability of protection against mechanical impacts and ranges from 1 (about 0.15 Joule impact energy) to 10 (about 20 Joule impact energy).

Therefore, it is an object of the present invention to provide a luminaire, which overcomes the aforementioned drawbacks of the prior art. In particular, it is an object of the present invention to better avoid damage of internal components such as an indicator light source, i.e. to achieve a luminaire with a higher IK rating.

These and other objects, which become apparent upon reading the following description, are solved by the subject-matter of the independent claim. The dependent claims refer to preferred embodiments of the invention.

### 3. Summary of the invention

According to the invention, a luminaire is provided, which comprises a light-transmissive element through which light of a primary light source being provided inside of the luminaire can be emitted to an outside of the luminaire, and an indicator light source being provided inside of the luminaire, and an elastically compressible light guide member (longitudinally; e.g. rectilinearly, arcuately, angularly) extending between the indicator light source and the light-transmissive element for guiding the light of the indicator light source towards the light-transmissive element such that the guided light is emitted through the light-transmissive element to the outside of the luminaire.

In the context of the present invention, "primary light source" is to be understood as a light source of the luminaire mainly contributing to the light emission of the luminaire, e.g. for indicating an emergency route or for illuminating a space.

In the context of the present invention, "light guide member" is to be understood as a member which allows guidance of light of a light source - introduced into the light guide member - along its preferably longitudinal extension due to (internal) reflection, most preferably by total internal reflection, and to emit the so guided light preferably at another portion of the light guide member, e.g. opposite to the light introduction.

By way of the light guide member extending between the indicator light source and the light-transmissive element, the indicator light source and preferably other (internal) components for operating the luminaire can be positioned at a distant to or away from the light-transmissive element. As such, the risk that impacts or other environmental effects on the light-transmissive element affect the indicator light source or other internal components of the luminaire is reduced thus achieving a luminaire with a higher IK rating (i.e., a IK rating of up to 10). Further, deformation energy of the deformed, damaged or deflected parts of the light-transmissive element being in the vicinity of the indicator light source may be absorbed by the elastically compressible structure of the light guide member. Thereby, the reliability of the indicator light source is improved. And since the light guide member is an elastically compressible (flexible; i.e. having a compressible structure, such that the structure retracts towards its original structure when being decompressed) member, the light guide member can adapt itself to unwanted deformation, damage or deflection of the light-transmissive element. Therefore, even when the luminaire is deformed, damaged or deflected, a good visibility of the light emitted by the indicator light source is ensured.

The light guide member, preferably its light emission end for emitting the guided light, is in contact with the light-transmissive element. Due to the refraction of light at the contact area between the light guide member and the light-transmissive element a good visibility of the light emitted by the indicator light is ensured, in particular when the light-transmissive element is a (opal) diffuser. Preferably, the contact of the light guide member with the light-transmissive element is a surface contact. This provides even better visibility of the light emitted by the indicator light source.

Additionally the light guide member, preferably its light introduction end for introducing the light of the indicator light source, is in contact, preferably in surface contact, with the indicator light source. Therefore, light emission from the indicator light source into the light guide member is improved due to the refraction of light at the contact area between the light guide member and the indicator light source.

The light-transmissive element is provided to clamp the light guide member inside of the luminaire upon elastic compression of the light guide member. In other words, the light-transmissive element compresses (in an undamaged or brand-new state of the light-transmissive element) the light guide member, thereby effecting a biasing force between the light guide member and the light-transmissive element. Therefore, an easy way for predefined and secured attaching (positioning) of the light guide member in the luminaire is provided, while the clamping contact between the light-transmissive element and the light guide member provides good visibility of the light emitted by the light source.

The light guide member may extend longitudinally, preferably rectilinear, arcuate and/or angled, wherein the angled light guide member preferably comprises a bend having an angle α of 0<α≤90°. In other words, the light guide member may extend in a direction having a directional component in the main light emitting direction of the luminaire and/or a directional component being perpendicular to the main light emitting direction of the luminaire The main light emitting direction is to be understood as the main direction of the light emitted by the primary light source. Thereby good visibility of the light emitted by the indicator light source, e.g. when viewed in a direction from outside of the luminaire on a substantially flat light exiting surface of the light-transmissive element, is effected. Furthermore, interference with the light emitted by the primary light source may be reduced with the directional component being perpendicular to the main light emitting direction, thereby optimizing the visibility of the light emitted by the indicator light source. In particular, when the light guide member extends with both a directional component in the main light direction and a directional component being perpendicular to the main light direction, e.g. when the light guide member is bent (curved) or inclined with respect to the main light direction, a particularly good visibility of the light emitted by the indicator light source is achieved.

The longitudinal light guide member may comprises a light introduction end for introducing the light of the indicator light source and a light emission end opposite to the light introduction end for emitting the introduced and guided light. As such, the light guide member can reliably guide the light emitted by the indicator light source to the light-transmissive element.

The luminaire may comprise a PCB (printed circuit board) being functionally connected to at least the indicator light source and preferably carrying the indicator light source. The light guide member extends between the indicator light source provided on the PCB and the light-transmissive element. As such, the PCB may be provided at a distant from the light-transmissive element, thereby reducing the risk that an impact or other environmental influences on the light-transmissive element may affect the PCB. Further, the light guide member may absorb the energy of deformed parts of the light-transmissive element being near the light guide member, thereby reducing the amount of deformation energy being transmitted to the PCB.

The light guide member may be provided at the periphery of the luminaire and/or at the periphery of the PCB. This is particularly advantageous for a good visibility of the light emitted by the indicator light source, in particular since interference with light emitted by the primary light source is reduced. Furthermore, shadowing of the light emitted by the primary light source can be reduced.

The light guide member may have a hollow body. In other words, the light guide member may be provided as a tube, which by way of example has an inner wall for directing/reflecting (channeling) the light of the indicator light source towards the light-transmissive element. Alternatively, the light guide member may also have a solid body. For example, a plurality of light guiding fibers may constitute the full cross section. The light guide member may have a round, oval, rectangular, square or polygonal cross section.

The light guide member may be at least partially covered, e.g. coated, with or is made of a reflective material or its material comprises reflective particles. Thus, the efficiency of guiding light with the light guide member is increased. Alternatively or additionally, the longitudinal shape of the light guide member may allow for total internal reflection, thereby easily achieving a high efficiency of guiding light with the light guide member.

The material of the light guide member may have a shore hardness of at most 95ShA, preferably from 20 to 90ShA, more preferably from 30 to 75ShA, most preferably from 50 to 60ShA. These materials are particularly advantageous for a good reliability of the light guide member, when the light-transmissive element is deformed etc. In a particularly preferred example, the material of the light guide member is silicone.

The luminaire may further comprise a holder for holding the light guide member. Therefore, the light guide member can easily be held in a predefined position and/or orientation. The holder is preferably designed such that the light guide member is inserted in the holder. Thus, the light guide member can be easily assembled. In particular, the light guide member may be held or inserted in a light guide member guiding region of the holder, which preferably clamps the light guide member. Since this light guide member guiding region is preferably integrally formed with the light guide member, further elements for assembling or fixing the light guide member are not necessary. The light guide member guiding region of the holder may be a (through) hole of the holder.

The light guide member guiding region may be designed to comprise a space, in which the light guide member can expand due to compression of the light guide member. In other words, walls of the light guide member guiding region, e.g. walls for defining the aforementioned hole, may limit the space. In this space, material of the compressed region of the light guide member, e.g. compressed due to deformation of the light-transmissive element, can escape. Therefore, damage of the light guide member and the holder is prevented.

In particular, the light guide member guiding region, e.g. the space or the (through) hole, may receive the indicator light source, thereby effecting an improved protection of the indicator light source.

The holder, preferably at least its guiding region, is made of or provided, e.g. covered or coated, with a light reflective material. Thus, more light of the indicator light source can be directed to the light guide member.

The holder may be connected to the luminaire, preferably to the PCB, by means of a fastening element such as a snap fit. Therefore, the holder can be easily assembled with the luminaire. In particular, the snap fit may be provided such that a lug engages behind a rim or an edge of the PCB.

The luminaire may further comprise a housing for receiving and preferably hermetically housing the light-transmissive element. The housing and the light-transmissive element thus define a substantially closed (waterproof) space, in which at least the indicator light source and the light guide member may be provided. Furthermore, the primary light source may also be provided inside said closed space. Preferably, the housing is further designed for receiving the PCB and/or other components for operating the luminaire, e.g. a battery, a driver and/or an emergency driver. That is, these components may also be provided inside of the space being defined by the light-transmissive element and the housing. Therefore, these components are securely covered.

The light-transmissive element may be a luminaire cover. As such, the light-transmissive element may simultaneously protect at least the indicator light source with respect to various environmental influences.

The light-transmissive element may be designed to diffuse the light of the primary light source being provided inside of the luminaire. Thus, the light-transmissive element may function as a diffuser. (Opal) Diffusion of the light may be advantageous for indicating a specific picture being provided on the outside of the light-transmissive element, e.g. indication for an escape path or the same.

The indicator light source may be a status indicator light source. A status of the luminaire may be representative of a mechanical and/or electrical/electronic state of the luminaire; for example, an energy (charging) level of a battery, or a maintenance state, in which the luminaire malfunctions. In general, the status may relate to emergency related parameters for ensuring that the luminaire has a high availability. In a preferred example, the status indicator light source is adapted for indicating a status of components for operating the luminaire. An example for such a component is a battery of the luminaire (e.g. a battery for supplying the luminaire in an emergency operation mode during power failure of the mains power), wherein the status indicator light source is adapted for indicating a charging status (charging level etc.) of the battery. Therefore, it can be ensured that an empty battery is timely detected. In this case, the indicator light source may be driven autonomously, i.e. independently from said battery, *e.g.* by way of a secondary battery.

The indicator light source may comprise a plurality of light sources for indicating a plurality of statuses. Due to the various statuses, the availability of the luminaire is improved. The plurality of light sources is preferably adapted to emit light in different colors and/or intensities, e.g. to selectively emit at least green and red light. That is, the plurality of light sources may comprise at least a green and a red light source. Having different colours and/or intensities is particularly advantageous for easily differentiating between a critical and an uncritical condition.

The luminaire may comprise a secondary light source inside of the luminaire for emitting light to the outside of the luminaire, in particular in the main light emitting direction of the luminaire. The secondary light source may comprise at least one light source, e.g., an LED or an LED cluster like an RGB-LED-cluster.

In a preferred example, the luminaire is an emergency luminaire. Since emergency luminaires require a high availability, in particular during tough conditions (e.g. high impact(s) (forces) on the luminaire), the luminaire as described above is particularly advantageous for such luminaires. In particular emergency luminaires should also function during a power failure of the mains power. The indicator light source may prevent that a battery for operating the luminaire during a power failure of the mains power is empty. Therefore, the reliability of the emergency luminaire is even further improved.

### 4. Description of a preferred embodiment

In the following, the invention is described exemplarily with reference to the enclosed figures, in which
- **Figure 1**: is a schematic cross-sectional view of a preferred embodiment of the luminaire according to the invention,
- **Figure 2**: is a detail view of a part of the luminaire shown in figure 1,
- **Figure 3**: is a first perspective cross-sectional view of a part of the luminaire shown in figure 1,
- **Figure 4**: is second perspective cross-sectional view of a part of the luminaire shown figure 1, and
- **Figure 5**: is a perspective view of the light guide member with the holder of the luminaire shown in figures 1 to 4.

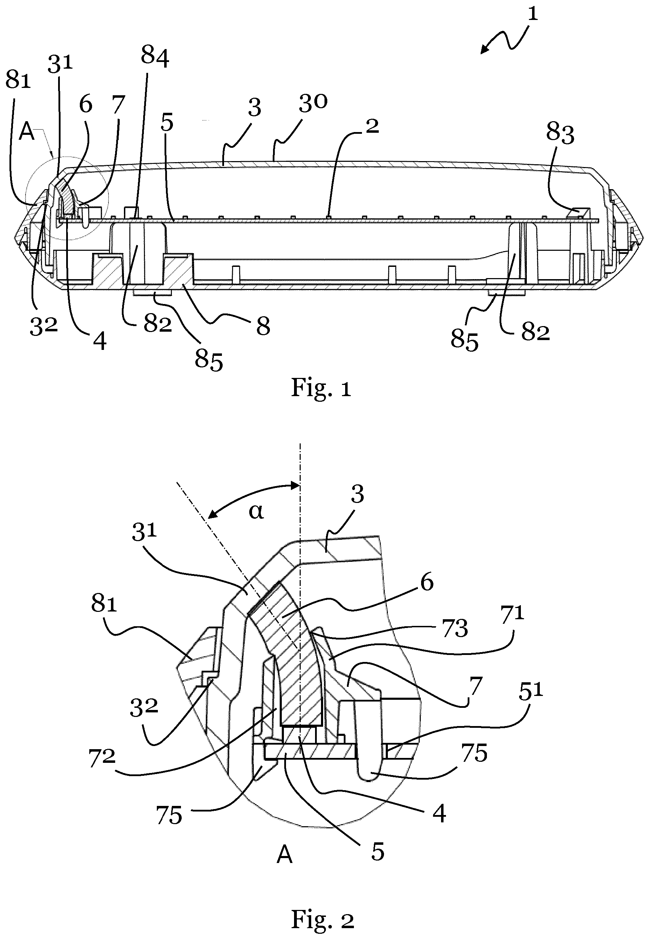

Figures 1 to 4 show an example of a preferred embodiment of a luminaire 1 of the invention. The luminaire 1 may be any luminaire, in particular a luminaire for illuminating a space or an object, and/or for indicating a sign, image or the like. The luminaire 1 may have an energy input, e.g. a plug or a connector, by way of which the luminaire 1 may be supplied with energy from the mains power. The luminaire 1 may also comprise a battery for operating the luminaire 1, in particular in an emergency operation mode, e.g. during power failure of the mains power. Preferably, the luminaire 1 is an emergency and/or impact resistant luminaire. The luminaire 1 may be a waterproof luminaire. Being used as an emergency luminaire, the luminaire 1 may illuminate an emergency route and/or indicate an emergency route. The luminaire 1 may be attached to a wall or a ceiling, e.g. by way of suitable fastening means.

The luminaire 1 may comprise a primary light source 2 being provided inside of the luminaire 1. The primary light source 2 is provided to emit the main part of the luminaire's light emission. For example, the light emitted by the primary light source 2 is used for the (main) purpose of the luminaire 1, *e.g.* illumination of a space or an object. The primary light source 2 preferably constitutes the main light emitting direction of the luminaire **1,** which is preferably perpendicular to the primary light source 2. The primary light source 2 may comprise at least one light source, preferably a plurality of light sources, wherein the plurality of light sources is preferably evenly distributed inside of the luminaire 1. Preferably, the plurality of light sources of the primary light source 2 is evenly distributed over an area, wherein the main light emitting direction is perpendicular to said area. Each of the at least one light source 2 may be an LED (light emitting diode) or an LED cluster, like an RGB-LED-cluster.

The luminaire 1 comprises a light-transmissive element 3 through which light of the primary light source 2 can be emitted to an outside of the luminaire 1. The light-transmissive element 3 may comprise a substantially planar (flat) light exiting surface 30, wherein substantially all of the light emitted by the primary light source 2 exits the luminaire 1 through said light exiting surface 30; in other words, the main light emitting direction may be substantially perpendicular to said light exiting surface 30. The light-transmissive element 3 may be transparent or translucent, so that light is not reflected and/or absorbed in the light-transmissive element 3. The light-transmissive element 3 may be designed such that one can look from the outside of the luminaire 1 to the inside of the luminaire 1. Preferably, the light-transmissive element 3 is opal and/or designed to diffuse the light of the primary light source 2. Therefore, the light-transmissive element 3 may be designed as a (opal) diffuser. For example, the light-transmissive element 3 may be coated with a layer (being on a side of inside and/or outside of the luminaire 1) for defusing the light. Additionally or alternatively, light defusing particles may be embedded in the light-transmissive element 3 for defusing the light of the primary light source 2.

The light-transmissive element 3 preferably has a material capable of absorbing impact forces from outside of the luminaire 1 onto the light-transmissive element 3. Therefore, it can be prevented that components of the luminaire 1 are damaged. For example, the material of the light transmissive element 3 is a material capable of being plastically deformed, when an impact force or an (heavy) impulse acts on the light-transmissive element. A suitable material is, e.g., polycarbonate (PC).

The luminaire 1 further comprises an indicator light source 4 being provided inside of the luminaire 1 and at a distant (e.g. about 20 millimeters) to the light-transmissive element 3, in particular at a distant to the light exiting surface 30. Preferably, the indicator light source 4 is being used as a status indicator light source. As such, the indicator light source 4 may indicate a status of a component for operating the luminaire 1. For example, the luminaire 1 may comprise a battery (not shown) for operating the luminaire 1, *e.g.* in an emergency operation mode, in which mains power is not available. The indicator light source 4 then may indicate the charging status of the battery. Preferably, and for being independent from the (main) battery, the indicator light source 4 has an independent energy source, e.g. a (secondary) battery. However, the indicator light source 4 is not limited to indicate a specific status. In general, the indicator light source 4 may indicate any mechanical and/or electric/electronic status of the luminaire 1. In particular, the indicator light source 4 may indicate a plurality of statuses, i.e. besides a binary status also status having three, four or more states.

The indicator light source 4 may comprise a (single) light source. However, the indicator light source 4 may also comprise a plurality of light sources. Having a plurality of light sources for the indicator light source 4 is particularly advantageous for indicating a plurality of statuses, e.g. by emitting a plurality of colours, in particular green and red light. The plurality of light sources may be adapted to emit light in different colors and/or intensities. The light source of the indicator light source 4 may be a colour tunable light source. Preferably, each of the at least one light source of the indicator light source 4 is a point light source like an LED or an LED cluster (e.g. RGB etc.).

The indicator light source 4 may be functionally connected to and preferably carried by a PCB 5. The PCB 5 may be provided at a distant to the light-transmissive element 3, in particular at a distant to the light exiting surface 30. Additionally or alternatively, also the primary light source 2 may be functionally connected to and preferably carried by the PCB 5. The plurality of light sources of the primary light source 2 may be evenly distributed over the area of the PCB 5, so that the main light emitting direction is substantially perpendicular to the two-dimensional extension of the luminaire 1 and/or the PCB 5. Preferably, the indicator light source 4 is provided at the periphery or circumference of the PCB 5, i.e. in the vicinity of the rim/edge of the PCB 5.

The luminaire 1 may also comprise two or more indicator light sources 4. A plurality of indicator light sources 4 is advantageous for simultaneously indicating several states of the luminaire 1 as described above.

The luminaire 1 further has an elastically compressible light guide member 6. The light guide member 6 extends between the indicator light source 4 and the light-transmissive element 3 for guiding or channeling the light of the indicator light source 4 towards the light-transmissive element 3 such that the guided light is emitted through the light-transmissive element 3 to the outside of the luminaire 1. In other words, the light guide member 6 optically couples the light-transmissive element 3 with the indicator light source 4 and, thus, functions as an optical coupler. That is, the light emitted by the indicator light source 4 is preferably focused and guided by the light guide member 6 such that the so guided and preferably focused light has a good visibility from outside of the luminaire 1. The light guide member 6, in particular its longitudinal shape, preferably uses total internal reflection to channel the light emitted by indicator light source 4. Therefore, the light guide member 6 does not need a cover or a sleeve.

Figures 1 to 4 exemplarily show, that the light guide member 6 is preferably in (surface) contact with the light-transmissive element 3. In other words, the light guide member 6 may comprise one (flat) end, preferably a light emission end for emitting the guided light, which is in contact with the light-transmissive element 3. In the contact area between the light-transmissive element 3 and the light guide member 6, the light guided in the light guide member 6 is refracted and thus exits the one end of the light guide member 6 for being emitted through the light-transmissive element 3. The light guide member 6 may comprise another (flat) end, preferably the light introduction end for introducing the light of the indicator light source 4, which is in contact, preferably in a surface contact, with the indicator light source 4. As such, good transmission of the light emitted by the indicator light source 4 to the light guide member 6 is effected. The light emission end may be opposite to the light introduction end.

The light-transmissive element 3 may be provided to clamp the light guide member 6 inside of the luminaire 1. Clamping of the light guide member 6 inside of the luminaire 1 may be effected by bringing at least the one end of the light guide member 6 in contact with the light-transmissive element 3, wherein, preferably, the other end of the light guide member 6 is in contact with the indicator light source 4. Due to the clamping contact between the light-transmissive element 3 and the light guide member 6, the light guide member 6 will elastically compress, thereby ensuring a secure predefined orientation/position of the light guide member 6 inside of the luminaire 1 due to the so effected biasing force.

With respect to the main light emitting direction, the light guide member 6 may extend at least in the main light emitting direction of the luminaire 1, i.e. in a direction of the light exiting surface of the element 3. Preferably, a part of the light guide member 6 beginning at the indicator light source 4 extends in the main light emitting direction. Additionally or alternatively, the light guide member 6 may extend in a direction being inclined or perpendicular to the main light emitting direction towards the luminaire 1, e.g. towards a lateral part of the luminaire 1. Preferably, the part of the light guide member 6 beginning at the light-transmissive element 3 at least extends in a direction being inclined or even perpendicular to the main light emitting direction. As shown in the figures, said part of the light guide member 6 may have an inclined extension with respect to the main light emitting direction, i.e. an extension having both a directional component being parallel to the main light emitting direction and a directional component being inclined or perpendicular to the main light emitting direction. Thereby, the light guide member 6 may have a bent (or curved) form or a form having an angle between the aforementioned two parts of the light guide member 6. That is, the light guide member 6 may extend longitudinally, preferably rectilinear, arcuate and/or angled, wherein the angled light guide member 6 preferably comprises a bend having an angle α of o<α≤90°.

The aforementioned extension of the light guide member 6, *e.g.* the bent or curved extension of the light guide member 6, may be effected by bringing the light-transmissive element 3 in contact with the light guide member 6. More specifically, the light-transmissive element 3 may have an inclined or chamfered portion 31, which, when brought into contact with the light guide member 6, e.g. with the one end of the light guide member 6, automatically elastically deforms or compresses the light guide member 6 to have the extension as described above, in particular an extension being curved or both perpendicular and parallel to the main light emitting direction.

The light guide member 6 preferably extends between indicator light source 4 provided on the PCB 5 and the light-transmissive element 3. In particular, the light guide member 6 may be provided at the periphery or circumference of the luminaire 6 and/or at the periphery or circumference of the PCB 5. In this position and when viewed in a top view of the luminaire 1 or the PCB 5, the light guide member 6 may extend over the edge or rim of the PCB 5.

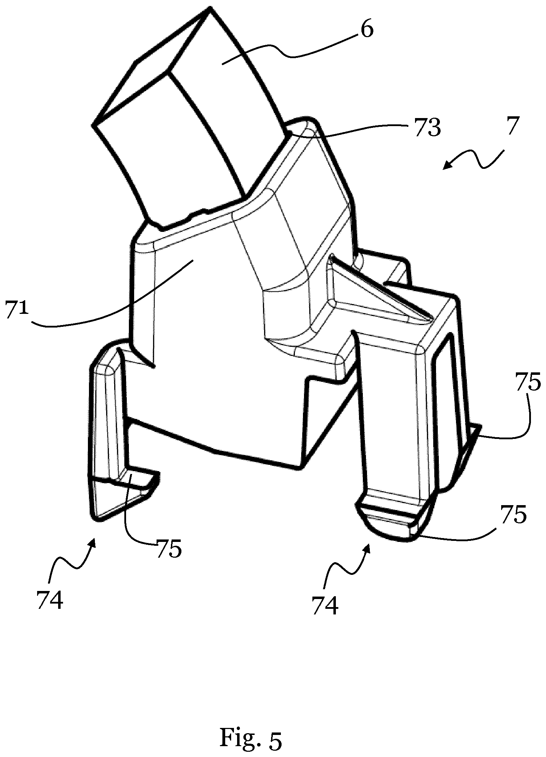

As exemplarily shown, e.g., in figure 5, the light guide member 6 may have a rectangular, in particular square, cross section and be a solid body. The invention is, however, not limited to such a cross section or body. In particular, the light guide member 6 may also be a hollow body, and thus may be provided as a tube or the like. Having a hollow body or cross-section, the light guide member 6 may comprise an inner (and/or outer) wall or surface for guiding and/or reflecting the light, e.g. by having reflective inner walls. In addition, other forms of cross-sections are possible, e.g. a round, oval or polygonal cross section. Further, the light guide member 6 may be covered, e.g. coated, with or is made of a reflective outer surface to thus increase the efficiency of guiding light with the light guide member 6. Additionally or alternatively, the material of the light guide member 6 may comprise reflective particles.

The material of the light guide member 6 may be any soft and/or compressible material capable of absorbing external forces by its elastical properties. The material of the light guide member 6 should also be capable of guiding and preferably focusing light. Preferably, the material is transparent. In a preferred example, the material has a shore hardness (according to Shore A Hardness Scale) of at most 100ShA or 95ShA. Other examples of the light guide member 6 have a material with a shore hardness from 20 to 90ShA, more preferably from 30 to 75ShA, most preferably from 50 to 60ShA. In particular, silicone has been found as a particularly advantageous material for the light guide member 6.

As can be seen, in particular, in figures 2 and 5, the luminaire 1 may further comprises a holder 7 for holding the light guide member 6. As for the indicator light source 4, the holder 7 may be spaced away from the light-transmissive element 3. The holder 7 is preferably designed such that the light guide member 6 is inserted in the holder 7. In the preferred embodiment of the holder 7 shown in the figures, the light guide member 6 is inserted in the holder 7 by clamping or inserting the light guide member 6 in a light guide member guiding/exiting region 71. The light guide member guiding region 71 is preferably integrally formed with the holder 7. The light guide member guiding region 71 may be designed such that the light guide member 6 is elastically deformed to a predefined extension, e.g. to the above described (curved) extension of the light guide member 6. The light guide member guiding region 71 may have a form corresponding to the cross-section of the light guide member 6. Further, the light guide member guiding region 71 is preferably designed to comprise a space 72 (see, e.g., figure 2), or, in other words, walls of the light guide member guiding region 71 may limit the space 72. The space 72 is designed such that the light guide member 6 can - due to compression of the light guide member 6 - expand in the space 72. As such, the space 72 is preferably a volume being greater than the volume of the part of the light guide member 6 being provided inside of the light guide member guiding region 71. Therefore, the material of the light guide member 6 can expand in the empty space between the inner wall of the light guide member guiding region 71 and the (uncompressed) light guide member 6.

In the preferred embodiment exemplarily shown in the figures, the light guide member guiding region 71 is provided as a hole in the holder 7, preferably as a through hole. The hole may have an opening 73 being provided in an inclined manner (e.g. with respect to the main light emitting direction) so that by way of the opening 73 the light guide member 6 can be formed to the predefined extension, e.g. to the angled, arcuate, bent or curved extension as described above. Further, a part of the hole or of the light guide member region 71, preferably the part having the opening 73, may be provided in an inclined manner in order to form the light guide member 6 as described above.

As exemplarily shown in figures 1 to 4, the holder 7 may be releasably connected to the luminaire 1 by way of the PCB 5. The connection of the holder 7 with the PCB 5 may be provided by a fastening element. In the preferred embodiment shown in the figures, the fastening element is a snap fit (snap lock connection) 74. The snap fit 74 may comprise at least one protruding edge (lug) 75, which can engage with the PCB 5. The snap fit 74 preferably comprises a plurality of protruding edges 75. The plurality of protruding edges 75 may be provided such that at least one protruding edge 75, preferably two protruding edges 75, engages behind an edge of the PCB 5, and/or wherein at least one protruding edge 75, preferably two protruding edges 75, engages with a hole 51 of the PCB 5. The at least one protruding edge 75 is preferably provided on a respective leg for providing elasticity for the at least one protruding edge 75. Preferably, the snap fit 74 is integrally formed with the holder 7. Additionally or alternatively, the fastening element may also comprise an adhesive bond (e.g. glue), a form connection and/or a frictional connection for connecting the holder 7 releasably or permanently to the luminaire 1 or the PCB 5.

The holder 7 may be provided such in the luminaire 1 or on the PCB 5 that the indicator light source 4 extends inside of the holder 7, preferably inside of the light guide member guiding region 71 or the space 72. Preferably, the holder 7, in particular the inside of the holder 7 which receives the light guide member 6, *e.g.* the light guide member guiding region 71, may have reflective properties (e.g. being made of a high-density white material such as polycarbonate (PC) and/or (the inner wall) being covered or coated with a light reflective material) so that light emitted by the light source 4 can be reflected to the light guide member 6.

The invention is, however, not limited to a connection of the holder 7 to the PCB 5. That is, the holder 7 may also be connected or attached to other parts of the luminaire 1, *e.g.* to the housing of the luminaire 1 as described below. The connection of the holder 7 with the PCB 5 thus applies correspondingly to the connection of the holder 7 with other parts or components of the luminaire 1.

The light guide member 6 may also be held in the luminaire 1, *e.g.* on the PCB 5, with other connecting or fastening elements than the holder 7. For example, the light guide member 6 may be directly connected to the indicator light source 4 and/or the PCB 5, in particular by gluing the light guide member 6 on the indicator light source 4 and/or the PCB 5.

The luminaire 1 may further comprise a housing 8. The housing 8 may be designed for receiving the light-transmissive element 3. When the light-transmissive element 3 is received by the housing 8, the light-transmissive element 3 may be function as a luminaire cover of the luminaire 1. The light-transmissive element 3 may be connected to the housing 8 by a suitable fastening element, in particular such that the light-transmissive element 3 and the housing 8 define a waterproof or hermetic space. The fastening element may be provided integrally or separately with the light-transmissive element 3. In the preferred embodiment shown in figures 1 to 4, the light-transmissive element 3 is connected to the housing 8 by way of a snap fit. More specifically, the snap fit may be provided such that the light-transmissive element 3 comprises a step 32 behind which a lug 81 of the housing 8 can engage. The step 32 is preferably provided at a lateral part or at the circumference of the light-transmissive element 3, preferably next to the chamfered surface 31. Alternatively or additionally, other fastening elements such as form and/or frictional connections (e.g. bolts) may be used for connecting the light-transmissive element 3 with the housing 8.

The housing 8 may further be designed to receive the PCB 5. Connecting the PCB 5 with the housing 8 may be effected by a suitable fastening element such as a form and/or frictional connection. In the preferred embodiment shown in figures 1 to 4, the PCB 5 is held by the housing 8 by way of snap fit. As exemplarily shown, e.g., in figures 1, 3, and 4, the housing 8 may comprise at least one protrusion 82, preferably two protrusions 82, on which the PCB 5 is placed, wherein a lug or snapping protrusion 83 (see figure 1) is provided to engage with the PCB 5, *e.g.* by engaging behind an edge of the PCB 5, for pushing the PCB 5 against the at least one protrusion 82. Each of the at least one protrusion 82 may comprise a protrusion 84 for engaging with a hole 52 of the PCB 5 so that the PCB 5 is in a predefined position and/or orientation with respect to the housing 8.

The housing 8 may also receive or house other components for operating the luminaire 1. Such components may be a battery for supplying the luminaire 1 with energy (in the emergency operation mode), a further battery for supplying the indicator light source 4 with energy, a driver for driving the primary light source 2 and/or the indicator light source 4, and/or an emergency driver for driving the primary light source 2 and/or the indicator light source 4 in case the driver does not function and/or during power failure. One, more or all of these components may be provided between the PCB 5 and the housing 8, *i.e.* between the PCB 5 and a bottom of the housing 8.

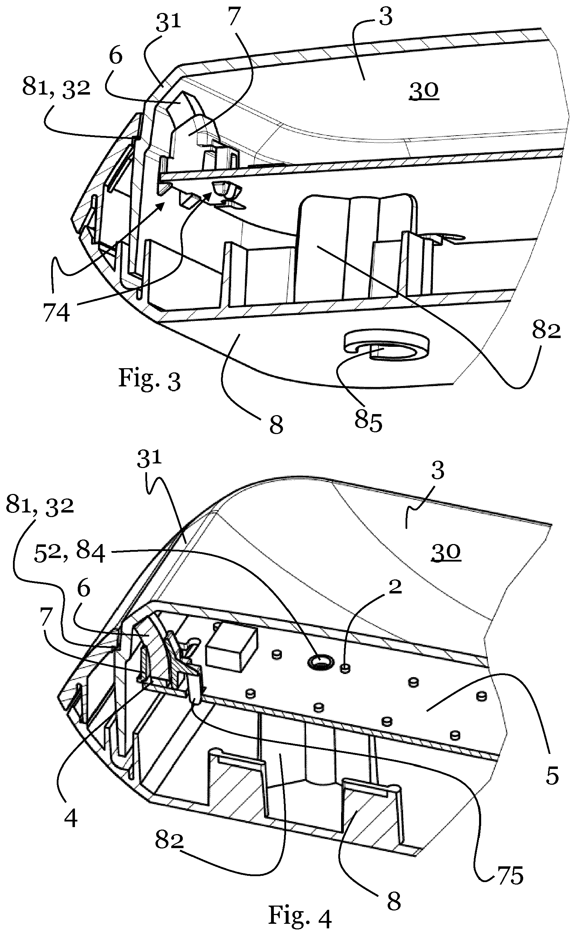

The housing 8, in particular the back side of the housing 8, may comprise fastening or attaching means for attaching the luminaire 1 to a wall or a ceiling. Said fastening or attaching means may comprise at least a (integrally formed) attaching region 85 (see in particular figures 1 and 3), *e.g.* a hole, which can be brought into contact with a corresponding connection or fastening element, e.g. a bolt.

In the following, a preferred application of the luminaire 1 is described.

The luminaire 1 may be provided in an environment, in which the luminaire 1 might be exposed to impact forces from the outside of the luminaire 1. In case impact forces act on the outside of the light-transmissive element 3, the light-transmissive element 3 may elastically or plastically deform/deflect and, thus, move towards the inside of the luminaire 1 and to the indicator light source 4. However, since at least the indicator light source 4 is provided at the distant from the light-transmissive element 3, the possibility that the light-transmissive element 3 reaches the indicator light source 4 due to deformation is reduced. The elastically compressible light guide member 6 will - due to its elastically compressible structure - adapt itself to the deflection of the light-transmissive element 3. Thereby, even in case the luminaire 1 or the light-transmissive element 3 is damaged or deflected, light emitted by the indicator light source 4 can still be emitted through the light-transmissive element 3, namely by way of the light guide member 6 having a structure being adapted to the deflected light-transmissive element 3.

As such, the luminaire 1 according to the present invention provides a luminaire, which even in a damaged or deflected state can reliably and highly visible indicate a status of the luminaire 1, *e.g.,* a status such as a charging level of a battery or maintenance level of the luminaire 1. In other words, the luminaire 1 allows a high impact (IK) rating to be achieved, while still allowing a good visibility of the light emitted by the indicator light source 4.

It should be clear to a skilled person that the embodiment shown in the figures is only a preferred embodiment, but that, however, also other designs of the luminaire 1 are possible.

## Claims

1. Luminaire (1), comprising
- a light-transmissive element (3) through which light of a primary light source (2) being provided inside of the luminaire (1) can be emitted to an outside of the luminaire (1),
- an indicator light source (4) being provided inside of the luminaire (1), and
- an elastically compressible light guide member (6) extending between the indicator light source (4) and the light-transmissive element (3) for guiding the light of the indicator light source (4) towards the light-transmissive element (3) such that the guided light is emitted through the light-transmissive element (3) to the outside of the luminaire (1),
wherein the light guide member (6) is in contact with the light-transmissive element (3), and wherein the light guide member (6) is in contact with the indicator light source (6),
wherein the light-transmissive element (3) is provided to clamp the light guide member (6) inside of the luminaire (1) upon elastic compression of the light guide member (6).

2. Luminaire (1) according to claim 1, wherein the light guide member (6) extends longitudinally, preferably rectilinear, arcuate and/or angled, wherein the angled light guide member (6) preferably comprises a bend having an angle α of o<α≤90°, and/or wherein the longitudinal light guide member (6) comprises a light introduction end for introducing the light of the indicator light source and a light emission end opposite to the light introduction end for emitting the introduced and guided light.

3. Luminaire (1) according to any one of the preceding claims, wherein the luminaire (1) comprises a PCB (5) being functionally connected to at least the indicator light source (4), preferably carrying the indicator light source (4), wherein the light guide member (6) extends between the indicator light source (4) provided on the PCB (5) and the light-transmissive element (3).

4. Luminaire (1) according to any one of the preceding claims, wherein the light guide member (6) is provided at the periphery of the luminaire (1) and /or at the periphery of the PCB (5).

5. Luminaire (1) according to any one of the preceding claims, wherein the light guide member (6) is a hollow body or solid body, and/or wherein the light guide member (6) has a round, oval, rectangular, square or polygonal cross section, and/or wherein the light guide member is at least partially covered, e.g. coated, with or is made of a reflective material or its material comprises reflective particles, and/or wherein the longitudinal shape of the light guide member allows for total internal reflection.

6. Luminaire (1) according to any one of the preceding claims, wherein the material of the light guide member (6) has a shore hardness of at most 100 ShA or 95ShA, preferably from 20 to 90ShA, more preferably from 30 to 75ShA, most preferably from 50 to 60ShA, wherein the material of the light guide member (6) is preferably silicone.

7. Luminaire (1) according to any one of the preceding claims, wherein the luminaire further comprises a holder (7) for holding the light guide member (6), wherein the holder (7) is preferably designed such that the light guide member (6) is inserted in the holder (7), in particular by clamping and/or inserting the light guide member (7) in a light guide member guiding region (71) of the holder, e.g. a through hole of the holder (7), wherein the light guide member guiding region (71) is preferably designed to comprise a space (72), in which the light guide member (6) can expand due to compression of the light guide member (6) and/or receiving the indicator light source.

8. Luminaire (1) according to the preceding claim, wherein the holder (7) is connected to the luminaire (1), preferably to the PCB (5), by means of a fastening element such as a snap fit (74), and/or wherein the holder, preferably at least its guiding region (71), is made of or provided, e.g. covered or coated, with a light reflective material.

9. Luminaire (1) according to any one of the preceding claims, wherein the luminaire (1) further comprises a housing (8) for receiving, preferably hermetically housing, the light-transmissive element (3) and preferably the PCB (5) and/or other components for operating the luminaire (1), e.g. a battery, a driver and/or an emergency driver.

10. Luminaire (1) according to any one of the preceding claims, wherein the light transmissive element (3) is a luminaire cover, and/or wherein the light-transmissive element (3) is designed to diffuse the light of the primary light source (2) being provided inside of the luminaire, like a diffuser.

11. Luminaire (1) according to any one of the preceding claims, wherein the indicator light source (4) is a status indicator light source, wherein the status indicator light source (4) is preferably adapted for indicating a status of components for operating the luminaire (1), e.g. a charging status of a battery of the luminaire.

12. Luminaire (1) according to any one of the preceding claims, wherein the indicator light source (4) comprises a plurality of light sources for indicating a plurality of statuses, and/or wherein the light source or plurality of light sources are preferably adapted to emit light in different colors and/or intensities, e.g. to selectively emit green and red light.

13. Luminaire (1) according to any one of the preceding claims, wherein the luminaire (1) comprises a secondary light source (2) inside of the luminaire (1) for emitting light to the outside of the luminaire (1), in particular in the main light emitting direction of the luminaire (1), wherein the secondary light source (2) preferably comprises at least one LED or an LED cluster, like an RGB-LED-cluster.

14. Luminaire (1) according to any one of the preceding claims, wherein the luminaire (1) is an emergency luminaire.

## Patentansprüche

1. Leuchte (1), umfassend
- ein lichtdurchlässiges Element (3), durch das Licht einer primären Lichtquelle (2), die innerhalb der Leuchte (1) bereitgestellt ist, zu einer Außenseite der Leuchte (1) abgegeben werden kann,
- eine Anzeigelichtquelle (4), die innerhalb der Leuchte (1) bereitgestellt ist, und
- ein elastisch komprimierbares Lichtleitelement (6), das sich zwischen der Anzeigelichtquelle (4) und dem lichtdurchlässigen Element (3) zum Leiten des Lichts der Anzeigelichtquelle (4) in Richtung des lichtdurchlässigen Elements (3) derart erstreckt, dass das geleitete Licht durch das lichtdurchlässige Element (3) zu der Außenseite der Leuchte (1) abgegeben wird,
wobei das Lichtleitelement (6) mit dem lichtdurchlässigen Element (3) in Kontakt steht und wobei das Lichtleitelement (6) mit der Anzeigelichtquelle (6) in Kontakt steht,
wobei das lichtdurchlässige Element (3) bereitgestellt ist, um das Lichtleitelement (6) bei elastischer Kompression des Lichtleitelements (6) innerhalb der Leuchte (1) festzuklemmen.

2. Leuchte (1) nach Anspruch 1, wobei sich das Lichtleitelement (6) länglich, vorzugsweise geradlinig, bogenförmig und/oder abgewinkelt, erstreckt, wobei das abgewinkelte Lichtleitelement (6) vorzugsweise eine Biegung umfasst, die einen Winkel α von 0<α≤90 ° aufweist, und/oder wobei das längliche Lichtleitelement (6) ein Lichteinführende zum Einführen des Lichts der Anzeigelichtquelle und ein Lichtabgabeende gegenüber dem Lichteinführende zum Abgeben des eingeführten und geleiteten Lichts umfasst.

3. Leuchte (1) nach einem der vorstehenden Ansprüche, wobei die Leuchte (1) eine Leiterplatte (5) umfasst, die mit mindestens der Anzeigelichtquelle (4) wirkverbunden ist, die vorzugsweise die Anzeigelichtquelle (4) trägt, wobei sich das Lichtleitelement (6) zwischen der Anzeigelichtquelle (4), die auf der Leiterplatte (5) bereitgestellt ist, und dem lichtdurchlässigen Element (3) erstreckt.

4. Leuchte (1) nach einem der vorstehenden Ansprüche, wobei das Lichtleitelement (6) an dem Umfang der Leuchte (1) und/oder an dem Umfang der Leiterplatte (5) bereitgestellt ist.

5. Leuchte (1) nach einem der vorstehenden Ansprüche, wobei das Lichtleitelement (6) ein Hohlkörper oder Vollkörper ist und/oder wobei das Lichtleitelement (6) einen runden, ovalen, rechteckigen, quadratischen oder polygonalen Querschnitt aufweist und/oder wobei das Lichtleitelement mindestens teilweise mit einem reflektierenden Material bedeckt, z. B. beschichtet, ist oder daraus hergestellt ist oder sein Material reflektierende Partikel umfasst und/oder wobei die Längsform des Lichtleitelements eine innere Totalreflexion ermöglicht.

6. Leuchte (1) nach einem der vorstehenden Ansprüche, wobei das Material des Lichtleitelements (6) eine Shore-Härte von höchstens 100 ShA oder 95 ShA, vorzugsweise von 20 bis 90 ShA, mehr bevorzugt von 30 bis 75 ShA, am meisten bevorzugt von 50 bis 60 ShA, aufweist, wobei das Material des Lichtleitelements (6) vorzugsweise Silikon ist.

7. Leuchte (1) nach einem der vorstehenden Ansprüche, wobei die Leuchte ferner eine Halterung (7) zum Halten des Lichtleitelements (6) umfasst, wobei die Halterung (7) vorzugsweise derart ausgelegt ist, dass das Lichtleitelement (6) in die Halterung (7) eingesetzt ist, insbesondere durch Festklemmen und/oder Einsetzen des Lichtleitelements (7) in einen Lichtleitelementleitungsbereich (71) der Halterung, z. B. durch ein Loch der Halterung (7), wobei der Lichtleitelementleitungsbereich (71) vorzugsweise dazu ausgelegt ist, einen Raum (72) zu umfassen, in dem sich das Lichtleitelement (6) aufgrund von Kompression des Lichtleitelements (6) und/oder Aufnahme der Anzeigelichtquelle ausdehnen kann.

8. Leuchte (1) nach dem vorstehenden Anspruch, wobei die Halterung (7) mittels eines Befestigungselements wie eines Schnappverschlusses (74) mit der Leuchte (1), vorzugsweise mit der Leiterplatte (5), verbunden ist und/oder wobei die Halterung, vorzugsweise mindestens ihr Leitungsbereich (71), aus einem lichtreflektierenden Material hergestellt oder bereitgestellt, z. B. bedeckt oder beschichtet, ist.

9. Leuchte (1) nach einem der vorstehenden Ansprüche, wobei die Leuchte (1) ferner ein Gehäuse (8) zum Aufnehmen, vorzugsweise hermetischen Unterbringen, des lichtdurchlässigen Elements (3) und vorzugsweise der Leiterplatte (5) und/oder anderer Komponenten zum Betreiben der Leuchte (1), z. B. einer Batterie, eines Treibers und/oder eines Nottreibers, umfasst.

10. Leuchte (1) nach einem der vorstehenden Ansprüche, wobei das lichtdurchlässige Element (3) eine Leuchtenabdeckung ist und/oder wobei das lichtdurchlässige Element (3) dazu ausgelegt ist, das Licht der primären Lichtquelle (2), die innerhalb der Leuchte bereitgestellt ist, wie ein Diffusor zu streuen.

11. Leuchte (1) nach einem der vorstehenden Ansprüche, wobei die Anzeigelichtquelle (4) eine Zustandsanzeigelichtquelle ist, wobei die Zustandsanzeigelichtquelle (4) vorzugsweise zum Anzeigen eines Zustands von Komponenten zum Betreiben der Leuchte (1), z. B. eines Ladezustands einer Batterie der Leuchte, angepasst ist.

12. Leuchte (1) nach einem der vorstehenden Ansprüche, wobei die Anzeigelichtquelle (4) eine Vielzahl von Lichtquellen zum Anzeigen einer Vielzahl von Zuständen umfasst und/oder wobei die Lichtquelle oder die Vielzahl von Lichtquellen vorzugsweise angepasst sind, um Licht in verschiedenen Farben und/oder Intensitäten abzugeben, z. B. um selektiv grünes und rotes Licht abzugeben.

13. Leuchte (1) nach einem der vorstehenden Ansprüche, wobei die Leuchte (1) eine sekundäre Lichtquelle (2) innerhalb der Leuchte (1) zum Abgeben von Licht zu der Außenseite der Leuchte (1), insbesondere in der Hauptlichtabgaberichtung der Leuchte (1), umfasst, wobei die sekundäre Lichtquelle (2) vorzugsweise mindestens eine LED oder einen LED-Cluster, wie einen RGB-LED-Cluster, umfasst.

14. Leuchte (1) nach einem der vorstehenden Ansprüche, wobei die Leuchte (1) eine Notleuchte ist.

## Revendications

1. Luminaire (1), comprenant
- un élément transmetteur de lumière (3) à travers lequel de la lumière d'une source de lumière primaire (2) étant fournie à l'intérieur du luminaire (1) peut être émise vers un extérieur du luminaire (1),
- une source de lumière indicatrice (4) étant fournie à l'intérieur du luminaire (1), et
- un élément guide de lumière (6) élastiquement compressible s'étendant entre la source lumineuse indicatrice (4) et l'élément transmetteur de lumière (3) pour guider la lumière de la source lumineuse indicatrice (4) vers l'élément transmetteur de lumière (3) de telle sorte que la lumière guidée est émise à travers l'élément transmetteur de lumière (3) vers l'extérieur du luminaire (1),
dans lequel l'élément guide de lumière (6) est en contact avec l'élément transmetteur de lumière (3), et dans lequel l'élément guide de lumière (6) est en contact avec la source de lumière indicatrice (6),
dans lequel l'élément transmetteur de lumière (3) est fourni pour serrer l'élément guide de lumière (6) à l'intérieur du luminaire (1) lors de la compression élastique de l'élément guide de lumière (6).

2. Luminaire (1) selon la revendication 1, dans lequel l'élément guide de lumière (6) s'étend longitudinalement, de préférence rectiligne, arqué et/ou coudé, dans lequel l'élément guide de lumière (6) coudé comprend de préférence un pli ayant un angle α de 0<α≤90° et/ou dans lequel l'élément guide de lumière (6) longitudinal comprend une extrémité d'introduction de lumière pour introduire de la lumière de la source de lumière indicatrice et une extrémité d'émission de lumière opposée à l'extrémité d'introduction de lumière pour émettre la lumière introduite et guidée.

3. Luminaire (1) selon l'une quelconque des revendications précédentes, dans lequel le luminaire (1) comprend une carte à circuit imprimé (5) étant fonctionnellement connectée à au moins la source de lumière indicatrice (4), de préférence portant la source de lumière indicatrice (4), dans lequel l'élément guide de lumière (6) s'étend entre la source de lumière indicatrice (4) fournie sur la carte à circuit imprimé (5) et l'élément transmetteur de lumière (3).

4. Luminaire (1) selon l'une quelconque des revendications précédentes, dans lequel l'élément guide de lumière (6) est fourni au niveau de la périphérie du luminaire (1) et/ou au niveau de la périphérie de la carte à circuit imprimé (5).

5. Luminaire (1) selon l'une quelconque des revendications précédentes, dans lequel l'élément guide de lumière (6) est un corps creux ou un corps plein et/ou dans lequel l'élément guide de lumière (6) a une section transversale ronde, ovale, rectangulaire, carrée ou polygonale et/ou dans lequel l'élément guide de lumière est au moins partiellement couvert, par exemple revêtu, de ou est constitué d'un matériau réfléchissant ou son matériau comprend des particules réfléchissantes et/ou dans lequel la forme longitudinale de l'élément guide de lumière assure une réflexion interne totale.

6. Luminaire (1) selon l'une quelconque des revendications précédentes, dans lequel le matériau de l'élément guide de lumière (6) a une dureté Shore d'au plus 100 ShA ou 95 ShA, de préférence de 20 à 90 ShA, plus préférablement de 30 à 75 ShA, le plus préférablement de 50 à 60 ShA, dans lequel le matériau de l'élément guide de lumière (6) est de préférence de la silicone.

7. Luminaire (1) selon l'une quelconque des revendications précédentes, dans lequel le luminaire comprend en outre un support (7) pour supporter l'élément guide de lumière (6), dans lequel le support (7) est de préférence conçu de telle sorte que l'élément guide de lumière (6) est inséré dans le support (7), en particulier par serrage et/ou insertion de l'élément guide de lumière (7) dans une région de guidage d'élément guide de lumière (71) du support, par exemple un trou traversant du support (7), dans lequel la région de guidage d'élément guide de lumière (71) est de préférence conçue pour comprendre un espace (72), dans lequel l'élément guide de lumière (6) peut se dilater en raison d'une compression de l'élément guide de lumière (6) et/ou d'une réception de la source de lumière indicatrice.

8. Luminaire (1) selon la revendication précédente, dans lequel le support (7) est connecté au luminaire (1), de préférence à la carte à circuit imprimé (5), au moyen d'un élément de fixation tel qu'un ajustement encliquetable (74) et/ou dans lequel le support, de préférence au moins sa région de guidage (71), est constitué de ou est pourvu, par exemple couvert ou revêtu, d'un matériau réfléchissant la lumière.

9. Luminaire (1) selon l'une quelconque des revendications précédentes, dans lequel le luminaire (1) comprend en outre un logement (8) pour recevoir, de préférence loger hermétiquement, l'élément transmetteur de lumière (3) et de préférence la carte à circuit imprimé (5) et/ou d'autres composants pour faire fonctionner le luminaire (1), par exemple une batterie, un circuit d'attaque et/ou un circuit d'attaque d'urgence.

10. Luminaire (1) selon l'une quelconque des revendications précédentes, dans lequel l'élément transmetteur de lumière (3) est un couvercle de luminaire et/ou dans lequel l'élément transmetteur de lumière (3) est conçu pour diffuser la lumière de la source de lumière primaire (2) étant fournie à l'intérieur du luminaire, comme un diffuseur.

11. Luminaire (1) selon l'une quelconque des revendications précédentes, dans lequel la source de lumière indicatrice (4) est une source de lumière indicatrice d'état, dans lequel la source de lumière indicatrice d'état (4) est de préférence conçue pour indiquer un état de composants pour faire fonctionner le luminaire (1), par exemple un état de charge d'une batterie du luminaire.

12. Luminaire (1) selon l'une quelconque des revendications précédentes, dans lequel la source de lumière indicatrice (4) comprend une pluralité de sources de lumière pour indiquer une pluralité d'états et/ou dans lequel la source de lumière ou la pluralité de sources de lumière sont de préférence conçues pour émettre de la lumière en différentes couleurs et/ou intensités, par exemple pour émettre sélectivement de la lumière verte et rouge.

13. Luminaire (1) selon l'une quelconque des revendications précédentes, dans lequel le luminaire (1) comprend une source de lumière secondaire (2) à l'intérieur du luminaire (1) pour émettre de la lumière vers l'extérieur du luminaire (1), en particulier dans la direction principale d'émission de lumière du luminaire (1), dans lequel la source de lumière secondaire (2) comprend de préférence au moins une DEL ou un groupe de DEL, comme un groupe de DEL RVB.

14. Luminaire (1) selon l'une quelconque des revendications précédentes, dans lequel le luminaire (1) est un luminaire d'urgence.
